# EUROPEAN PATENT APPLICATION

(11) **EP 1 650 967 A1**
(43) Date of publication of application: **26.04.2006**
(21) Application number: 05022256.1
(22) Date of filing: 12.10.2005
(51) Int. Cl.: H04N 5/74, G03B 21/16, H05K 7/20

(54) **Video picture display unit**

(30) Priority: 19.10.2004 JP 2004304361
(71) Applicant: ORION ELECTRIC CO., Ltd., Takefu-City, Fukui 915-8555 (JP)
(72) Inventor: Taniguchi, Toshikazu, Takefu-city Fukui 915-8555 (JP); Seo, Toshitaka, Takefu-city Fukui 915-8555 (JP)
(74) Representative: Goddar, Heinz J.

(57) **Abstract**

The invention is to provide a video picture display unit capable of reducing discomfort given to a user by restraining influence of a noise of fans (9,10) after the power of the unit is turned off. A timer setting when the power is turned off (off timer setting or sleep setting) is stored in a setting portion (21) of a controller (11). A decision portion (22) decides as to whether the timer setting is present or non-present, and in cases where the power is turned off by the timer setting, the operation control portion (20) transmits a control signal to a driving circuit (18) so as to cause a fan (9) or a fan (10) to effect low speed rotating operation.

## Description

### FIELD OF THE INVENTION

The invention relates to a video picture display unit such as a television set like a projection television and so forth, a projection unit such as a projector, and a recorded picture reproducing display unit provided with a VCR, a DVD or an HDD or the like for displaying video picture sound information and the like.

### BACKGROUND OF THE INVENTION

Inasmuch as the foregoing video picture display unit uses a high voltage for clearly displaying a video picture, a large quantity of heat is generated, so that there has been employed a fan serving as cooling means for restraining the influence of such a heat. There is a likelihood of using a plurality of fans because the heat thus can be efficiently escaped or radiated to the outside by blowing air to a heat source while rotating the fans, and a cost is reduced. However, there occurs frequently that the video picture display unit can be installed in a serene environment such as in a house, which causes a problem arising from the rotation of the fans.

Therefore, there has been proposed a measure for reducing a noise involved in the rotation of a fan. For example, JP 2002-23267A discloses a projector in which the number of revolutions of a fan of a corresponding liquid crystal panel is decreased as a luminance level is higher, and it is increased as a voice level is higher, while it is decreased as accumulated light time of a light source lamp is longer, thereby reducing an unnecessary noise of the fan.

In the foregoing JP 2002-23267A, although there is a disclosure of the control of rotation of the fan during the operation of the projector, there is no specific disclosure of the control of rotation of the fan after the operation of the projector. That is, in the video picture display unit, heat from the heat source is not immediately radiated but gradually cooled even if the power is turned off to end the operation of the projector, and hence the fan need be rotated to continuously cool the heat during that time interval. Accordingly, there occurs a case where the fan is rotated to generate a noise even after the power of the unit is turned off, and the noise thus generated causes a problem, particularly in cases where a user sleeps after the power is turned off.

### SUMMARY OF THE INVENTION

It is therefore an object of the invention to provide a video picture display unit capable of reducing discomfort given to a user by restraining the influence of the noise of fans upon to the user after the power of the unit is turned off.

To achieve the above object, the video picture display unit of the invention comprises a display processing part for displaying video picture on a display part, fans for cooling a heat source of the display processing part, driving means for rotatably driving the fans, and a controller for driving and controlling the driving means, characterized in that the controller includes decision means for deciding presence or non-presence of timer setting when a power is turned off, and fan control means for driving and controlling the driving means so as to reduce the number of revolutions of the fans after a power-off processing in cases where the decision means decides the presence of the timer setting. Further, the fan control means is characterized in controlling the driving means so as to decrease the number of revolutions of the fans in stages.

With the arrangement of the video picture display unit as set forth above, in cases where the decision means decides the presence of timer setting when the power is turned off, the fan control means controls the driving means so as to decrease the number of revolutions of the fans after the power off processing, so that the noise of the fans is lowered after the power is turned off, thereby restraining the influence of the noise. Particularly, in a serene environment such as in a house, and the like, the noise generated by the fans is prone to be offensive to a user's ear, it is possible to minimize the influence of the noise upon the serene environment at the maximum by reducing the number of revolutions of the fans. Further, if the decision means decides the presence or non-presence of time setting when the power is turned off, it is possible to reduce discomfort given to the user by minimizing the noise of the fans at the time of sleeping of the user because timer setting frequently occurs when the power is turned off at the time of sleeping of the user.

Still further, if the fan control means controls the number of revolutions of the fans so as to be decreased in stages, it is possible to reduce the noise of the fans in a state where cooling efficient is maintained. That is, since the heat is continuously radiated from the heat source immediately after the power is turned off, and if the number of revolutions is abruptly decreased in this state, accumulation of heat from the heat source develops, there arises a possibility of adverse influence upon the video picture display unit. However, if the number of revolutions is decreased in stages, it is possible to reduce the noise by sequentially decreasing the number of revolutions while sufficiently cooling the heat from the heat source immediately after the power if turned off.

### BRIEF DESCRIPTION OF THE DRAWINGS

Fig. 1 is a schematic entire perspective view of a rear projection unit of an embodiment according to the invention;
Fig. 2 is a view of the rear projection unit taken along A-A in Fig. 1 as viewed from the right side;
Fig. 3 is a view of the rear projection unit taken along B-B in Fig. 2 as viewed from above;
Fig. 4 is a block diagram of a circuit configuration of the rear projection unit of the embodiment according to the invention;
Fig. 5 is a view for explaining an off-timer setting screen;
Fig. 6 is a view for explaining a sleep setting screen; and
Fig. 7 is a flow chart showing an operation processing of fans.

### BEST MODE FOR CARRYING OUT THE INVENTION

An embodiment of the invention is now described more in detail. Since the embodiment described hereinafter is a preferred concrete example to work the invention, it is variously limited in technical point of view, but the invention is not limited to the embodiment unless explicitly limiting thereto.

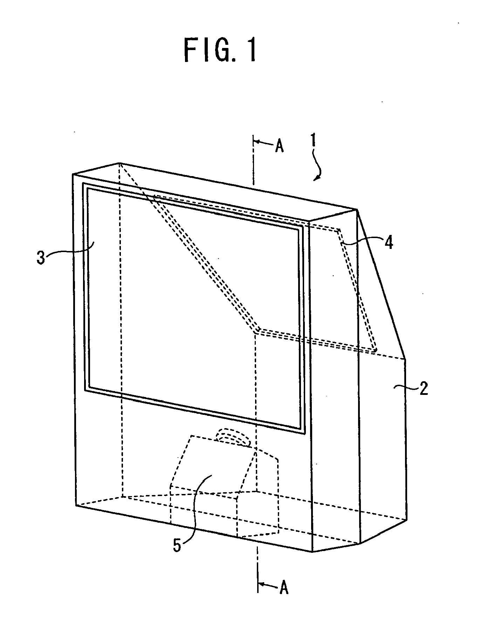

Fig. 1 is a schematic entire perspective view of a rear projection unit of an embodiment according to the invention. A rear projection unit 1 has a screen 3 fitted to a front face of a body housing 2 and a reflection mirror 4 fitted to a rear face of the body housing 2 while inclined toward the screen 3. An optical unit 5 is disposed on a bottom face of the body housing 2. A video picture emitted from the optical unit 5 is reflected off the screen 3 through the reflection mirror 4, and it is projected onto the rear face of the screen 3, then displayed on the front face of the screen 3.

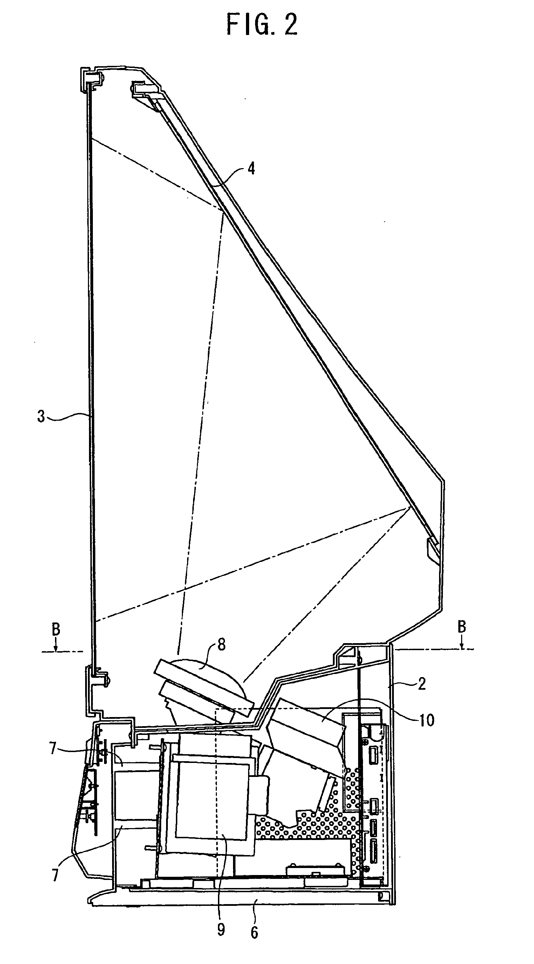

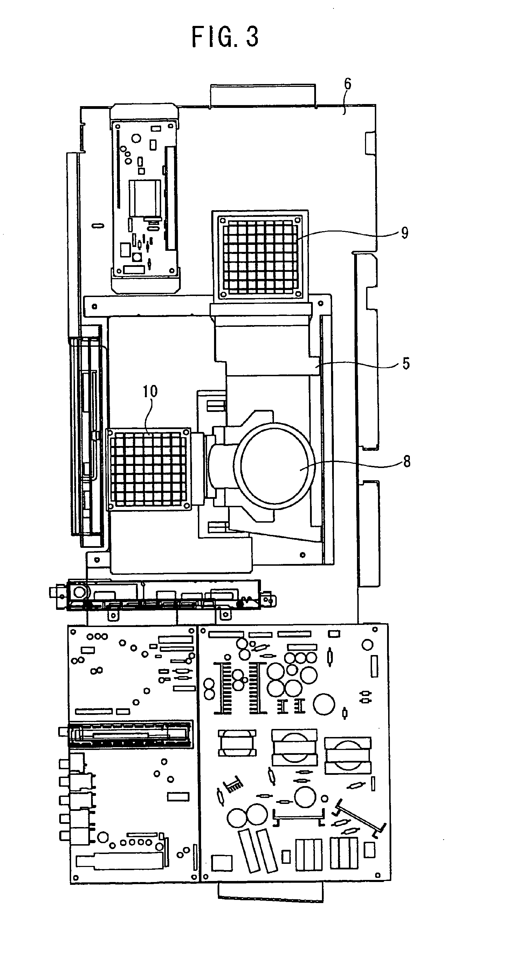

Fig. 2 is a view of the rear projection unit taken along A-A in Fig. 1 as viewed from the right side, and Fig. 3 is a view of the rear projection unit taken along B-B in Fig. 2 as viewed from above. The optical unit 5 is disposed on a metallic chassis frame 6 constituting the bottom face of the body housing 2, and the front face of the optical unit 5 is securely fitted to supporters 7 which are protruded from the front face of the body housing. A lamp for use in a light source (hereinafter referred to simply as light source lamp), not shown, is provided in the optical unit 5, and light beam emitted from the lamp is divided into three prime colors of red-green-blue using a dichroic mirror, and the divided colors are imaged by liquid crystal panels corresponding to each color, and they are synthesized again by a prism to form video picture, which is subsequently emitted from a projection lens 8. Such an optical unit is known.

As shown in Fig. 3, the optical unit 5 is disposed substantially at a central portion of the chassis frame 6 of the body housing 2, and has a fan 9 fitted to a right side thereof (upper side in Fig. 3) and another fan 10 fitted to a rear side thereof (left side in Fig. 3). The fan 9 is used for cooling liquid crystal panels for implementing optical processing of three prime colors while the fan 10 is disposed over a lamp accommodation portion and discharges heat inside the lamp accommodation portion outside through a duct, not shown.

As the light source lamp, a discharge lamp is used. Since a high voltage of about 1000V is applied to the light source lamp, the light source lamp has a higher heating value so that it need be constantly cooled by air blast from the fan 10 when it is operated. Since the liquid crystal panel portions are constantly irradiated with light from the light source lamp, they generate heat, and hence they need be constantly cooled by air blast from the fan 9, thereby preventing them from being influenced by the heat from the light source lamp.

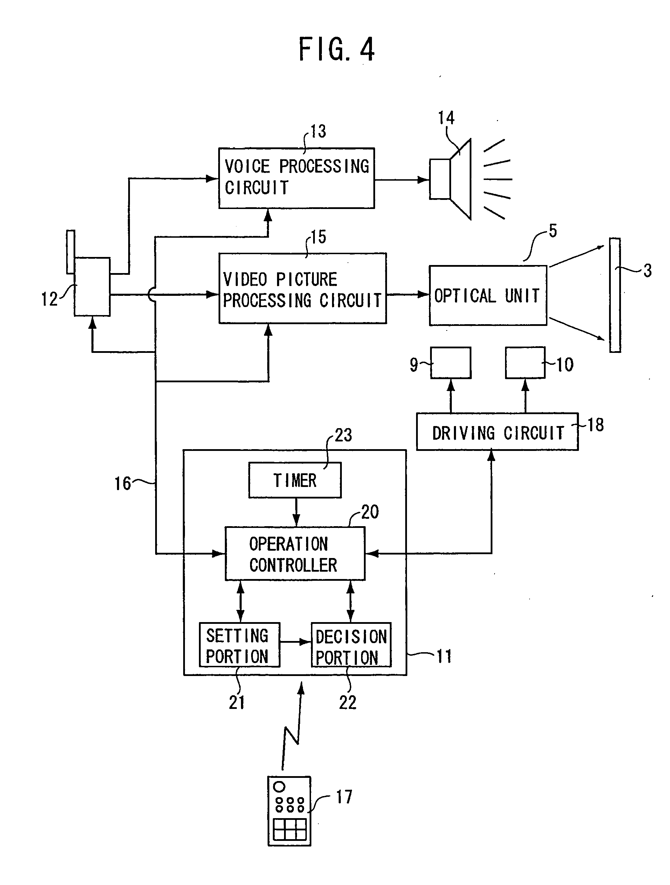

Fig. 4 is a block diagram of a circuit configuration of the rear projection unit 1. The rear projection unit 1 comprises a controller 11 for controlling the entire rear projection unit 1, a tuner 12 for receiving TV broadcast signals, a voice processing circuit 13 for implementing voice information processing based on the voice signal received from the tuner 12, a speaker 14 for outputting voice based on an output signal from the voice processing circuit 13, and a video picture processing circuit 15 for implementing a video picture information processing based on a video picture signal received from the tuner 12, wherein the controller 11, the tuner 12, the voice processing circuit 13 and the video picture processing circuit 15 are connected to one another by a data bus 16 so as to transmit and receive information therebetween. A signal outputted from a remote control 17 which issues operation information by a user's operation is transmitted to the controller 11, wherein a processing corresponding to the operation information is implemented. A diving circuit 18 for rotatably driving the fans 9 and 10 fitted to the optical unit 5 is subjected to control upon receipt of a driving control signal transmitted from the controller 11.

The controller 11 comprises an operation controller 20 for controlling an operation of the circuit of the tuner 12 and the like, and an operation of the driving circuit 18 via the data bus 16, a setting portion 21 for storing various setting information transmitted from the remoter control 17 and implementing a setting processing, a decision portion 22 for deciding as to whether a power is turned off and the timer setting is present or non-present, and the like, and a timer 23 for counting a predetermined time based on the control signal issued from the operation control portion 20.

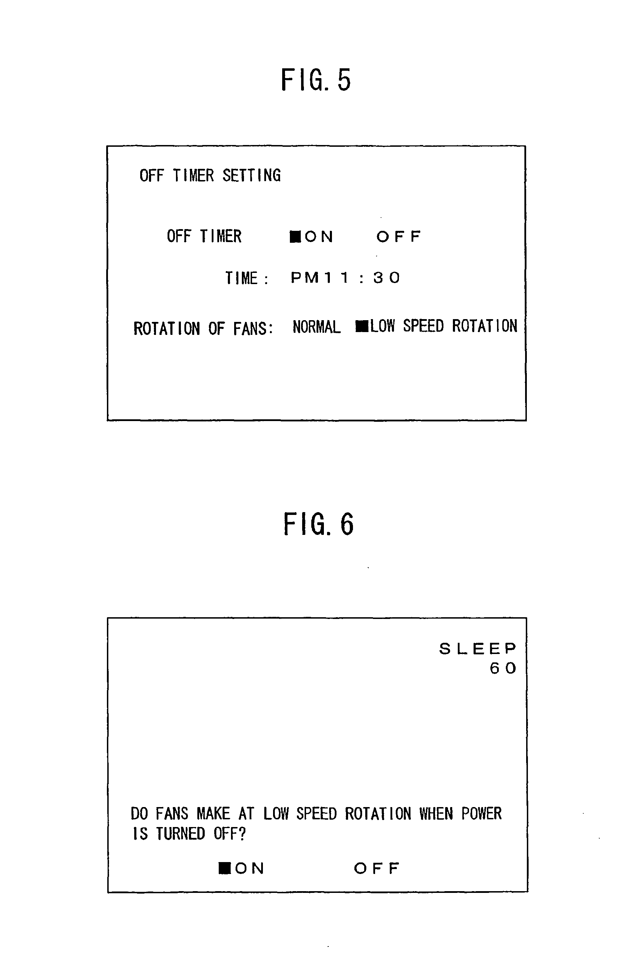

There are exemplified an off timer setting and a sleep setting as a timer setting when the power of the rear projection unit 1 is turned off. The off timer setting means setting in the manner that the power is turned off at a predetermined time, and a setting operation is implemented, for example, on a setting screen as shown in Fig. 5. It is indicated, on the off timer setting screen in Fig. 5, as to whether the off timer setting is implemented or not by selecting ON or OFF, wherein an initial setting is indicated as OFF. The time when the power is turned off is to be imputed to an input column of time, in this example, it is set that the power is turned off at 11:30 pm. By implementing the off timer setting, the rotating operation of the fans after the power is turned off can be selected. In cases where "normal" is selected, the fans effect the rotating operation in the same manner as that during the operation of the rear projection unit, and the fans effect rotating operation, for example, at 3000rpm for two minutes. In cases where "low speed rotation" is selected, the number of revolutions of the fans is decreased, the fans effect rotating operation, for example, at 1500rpm for four minutes. In cases where "low speed rotation" is selected, the number of revolutions of the fans is decreased, so that the noise generated from the fans is reduced by the decrease of the number of revolutions. Further, when the number of revolutions of the fans is decreased, the heat radiation effect caused by the air blast of the fans is weakened, and hence the rotating time is set longer than that in the case of "normal" by the decrease of the rotating speed.

The sleep setting means setting in the manner that the power is turned off upon elapse of a predetermined time interval, and the setting of rotating operation of the fans is implemented on a setting screen as shown in Fig. 6. In Fig. 6, it is indicated on the upper right of the setting screen that the sleep setting is implemented such that the power is to be turned off upon elapse of 60 minutes, and also indicated on the lower portion of the screen that the promotion of the selection of the low speed rotating operation of the fans is made. If "ON" is selected, the low speed rotating operation of the fans as set forth above is selected while if "OFF" is selected, the normal rotating operation of the fans is selected.

The timer setting and the sleep setting as mentioned above are implemented by operating the remote control 17, and the set information is stored in the setting portion 21, and it is read out when the instruction to turn off the power is issued, and these two settings are processed based on the set information.

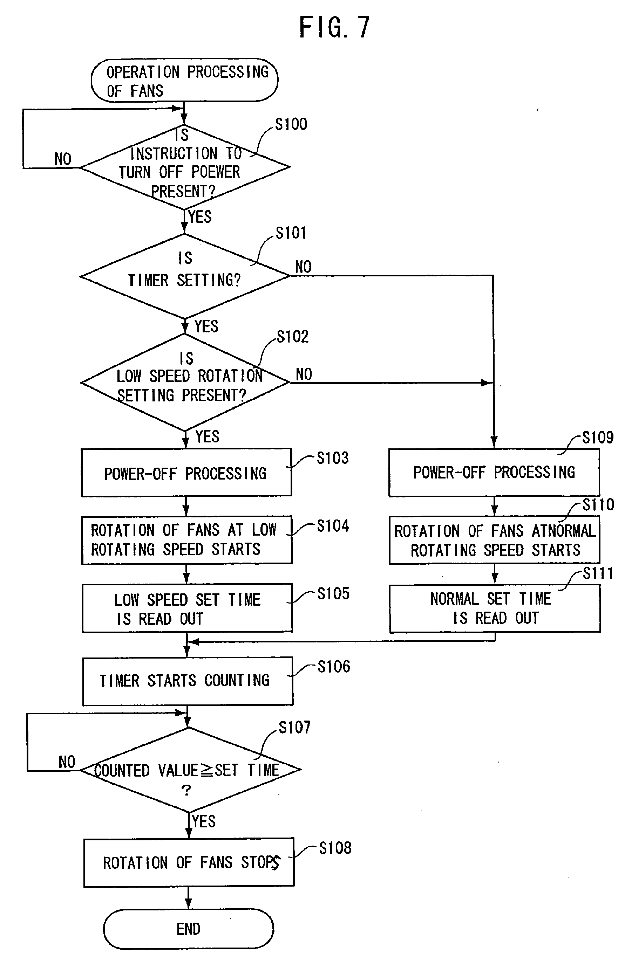

Fig. 7 shows operation processing of the fans when the power of the rear projection unit 1 is turned off. First, the decision portion 22 decides as to whether the instruction to turn off the power is effected or not (S100). Although there are a case of operation of a power source key of the remote control 17, or a case of setting operation such as off timer setting or sleep setting as the instruction to turn off the power, it is checked as to whether based on either case the instruction to turn off the power is effected or not. Then, the decision portion 22 checks the presence or non-presence of the timer setting (S101), and if the timer setting is present, it is checked as to whether the rotating operation of the fans is set to the low speed rotation in the same timer setting (S102). If the low speed rotation is set, after the power-off processing is implemented by the timer setting (S103), the operation controller 20 transmits a control signal to the driving circuit 18 so as to rotatably operate the fans at low speed rotation (e.g. 1500rpm), so that the fans start the low speed rotation (S104). The low speed set time (e.g. four minutes) is read out from the setting portion 21 simultaneously with the start of the rotating operation of the fans (S105), and it is set as the set time.

Subsequently, the timer 23 starts counting (S106), and it is checked as to whether the counted value of the timer 23 exceeds or not the set time (S107). If the counted value exceeds the set time, the rotation of the fans is stopped (S108), thereby ending the operation processing.

If it is not the instruction to turn off the power by the timer setting in step S101, or the low speed rotation is not set in step S102, after implementing the power-off processing (S109), the operation controller 20 transmits the control signal to the driving circuit 18 so as to rotate the fans at a normal rotating speed (e.g. 3000rpm) (S110). Thereafter, the normal set time (e.g. for two minutes) is read out simultaneously with the start of the rotating operation of the fans (S111), and it is set as a set time, and the operation proceeds to step S106.

According to the embodiment set forth above, although it is checked as to whether the low speed rotation is set in cases where there is timer setting when the power is turned off, it is possible to set in the manner that the fans effect low speed rotation automatically in the same case. In this case, the processing in step S102 may be omitted.

Further, in cases where the driving circuit 18 effects the low speed rotation of the fans, for example, a driving voltage to be supplied to the fans may be lowered. In cases where 12V is supplied to the fans as a driving voltage at the time of normal rotating operation (3000rpm), the driving voltage is to be lowered to 6V at the time of low speed rotating operation (1500rpm).

The driving circuit 18 is to be controlled by two patterns of the normal rotating operation and the low speed rotating operation. In the low rotating operation, the rotating speed may be varied by plural stages. For example, in cases where the fans are rotated 6000rpm at the normal operating operation time, if they are rotated in two patterns of 4500rpm and 1500rpm as the low rotating operation, the fans are forced to rotate 4500rpm immediately after entering a low speed rotating operation pattern to raise heat radiation effect while the fans are decreased in its rotating speed at 1500rpm at the stage as the cooling of the fans proceeds, thereby further reducing the noise. In such a manner, the rotating peed of the low speed rotating operation is appropriately set depending on the characteristics of the heat source of the rear projection unit 1, the noise can be reduced while effecting heat radiation efficiently

As mentioned above, inasmuch as the low speed rotating operation of the fans is controlled based on the presence or non-presence of the timer setting when the power is turned off, it is possible to restrain the discomfort given to the user which is caused by the noise of the fans after the power is turned off. Particularly, the timer setting frequently occurs when the power is turned off at the time of sleeping of the user, and the noise of the fans are prone to be offensive to the user's ear but the influence caused by the noise can be minimized.

According to the embodiment set forth above, although the rotation control of the fans is effected by the timer setting when the power is turned off, it can be effected by other setting. According to the video picture display unit, for example, which is integrated with recorded picture reproducer, a reservation of picture recording is not set, wherein if video picture is not displayed at the time of reservation of picture recording, the heat generated from the heat source is small so that the noise can be reduced by rotating the fans at low speed. Particularly, it is efficient when the reservation of the video recording is set at midnight. low speed rotation

## Claims

1. A video picture display unit comprising:
a display processing part (15) for displaying video picture on a display part (3);
fans (9, 10) for cooling a heat source of the display processing part (15);
driving means (18) for rotatably driving the fans (9, 10); and
a controller (11) for controlling driving of the driving means (18);
wherein the controller (11) includes decision means (22) for deciding presence or non-presence of timer setting when a power is turned off, and fan control means (20) for driving and controlling the driving means so as to reduce the number of revolutions of the fans (9, 10) after a power-off processing in cases where the decision means (22) decides the presence of the timer setting.

2. A video picture display unit according to Claim 1, wherein the fan control means control the driving means (18) so as to decrease the number of revolutions of the fans (9, 10) in stages.
